# EUROPEAN PATENT SPECIFICATION

(11) **EP 2 469 505 B1**
(45) Date of publication and mention of the grant of the patent: **27.02.2019**
(21) Application number: 10196721.4
(22) Date of filing: 23.12.2010
(51) Int. Cl.: G09G 5/10, G09G 3/20, H04M 1/02, G06F 1/16, G06F 1/32, H04W 52/02

(54) **Handheld electronic communication device having an age compensating display**
Tragbare elektronische Kommunikationsvorrichtung mit altersausgleichender Anzeige
Dispositif de communication électronique portable doté d'un affichage compensant les effets du vieillissement

(43) Date of publication of application: 27.06.2012
(73) Proprietor: BlackBerry Limited, Waterloo, ON N2K 0A7 (CA)
(72) Inventor: Griffin, Jason Tyler, Waterloo, Ontario N2L 3W8 (CA)
(74) Representative: Hanna Moore + Curley

(56) References cited:
- EP-A2- 1 291 840
- EP-A2- 1 307 030
- JP-A- 2004 144 819
- JP-A- 2006 330 222
- JP-A- 2008 096 590
- US-A- 5 894 298
- US-A1- 2006 087 588
- US-A1- 2007 109 284
- US-A1- 2008 284 767
- US-A1- 2010 245 227

## Description

### FIELD OF TECHNOLOGY

The present disclosure relates to electronic devices, including handheld electronic communication devices having a display that is subject to differential aging.

### BACKGROUND

Electronic devices, including handheld electronic communication devices, have gained widespread use and may provide a variety of functions including, for example, telephonic, electronic text messaging, personal information manager (PIM) application functions, mobile web browsing, and audio and video playback, among other things. Sliding displays are sometimes used on electronic devices.

In environments where regions of a display screen are illuminated differently, differential aging of the display screen regions can occur over time. The document EP 1307030 A2 discloses a portable communication apparatus including a main housing having at least a display section and an operation section and a movable housing that is engaged with the main housing slidably in a longitudinal direction between a retracted state and an extended state. The document US 2006/0087588 A1 discloses methods for manual and automatic compensation of differential aging of an OLED display device, the OLED display device including a display screen driven with display modes having different aspect ratios.

### SUMMARY

Accordingly there is provided a method and a device as detailed in the claims that follow.

### BRIEF DESCRIPTION OF THE DRAWINGS

Embodiments of the present disclosure will now be described, by way of example only, with reference to the attached Figures, wherein:
FIG. 1 is a simplified block diagram of components including internal components of a handheld electronic communication device according to an example embodiment;
FIG. 2 is a perspective view of an example of a handheld electronic communication device including a display assembly in a retracted position;
FIG. 3 is a perspective view of the handheld electronic communication device of FIG. 2 showing the display assembly in an extended position;
FIG. 4A is a front view of the handheld electronic communication device of FIG. 2 showing the display assembly in the retracted position;
FIG. 4B is a back view of the handheld electronic communication device of FIG. 2 showing the display assembly in the retracted position;
FIG. 4C is a right side view of the handheld electronic communication device of FIG. 2 showing the display assembly in the retracted position;
FIG. 4D is a left side view of the handheld electronic communication device of FIG. 2 showing the display assembly in the retracted position;
FIG. 5A is a front view of the handheld electronic communication device of FIG. 2 showing the display assembly in the extended position;
FIG. 5B is a back view of the handheld electronic communication device of FIG. 2 showing the display assembly in the extended position;
FIG. 5C is a right side view of the handheld electronic communication device of FIG. 2 showing the display assembly in the extended position;
FIG. 5D is a left side view of the handheld electronic communication device of FIG. 2 showing the display assembly in the extended position;
FIG. 6A is a front view of a display assembly of the handheld electronic communication device of FIG. 2;
FIG. 6B is a back view of the display assembly of FIG. 6A;
FIG. 6C is a side view of the display assembly of FIG. 6A;
FIG. 7 is an exploded side view of a housing of the handheld electronic communication device of FIG. 2;
FIG. 8 is a front view of a front housing member of the housing of FIG. 7;
FIG. 9 is a front view of a base of the housing of FIG. 7;
FIG. 10 is a schematic sectional view of the handheld electronic communication device of FIG. 2, taken along lines X-X of FIG 4A;
FIG. 11 is a schematic sectional view of the handheld electronic communication device of FIG. 2, taken along lines XI-XI of FIG 4B;
FIG. 12 is a back view of a further example of a handheld electronic communication device, showing the display assembly in the retracted position;
FIG. 13 is a back view of a further example of a handheld electronic communication device, showing the display assembly in the retracted position; and
FIG. 14 is an example flowchart of a method for compensating for differential aging of a sliding display on a handheld electronic device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

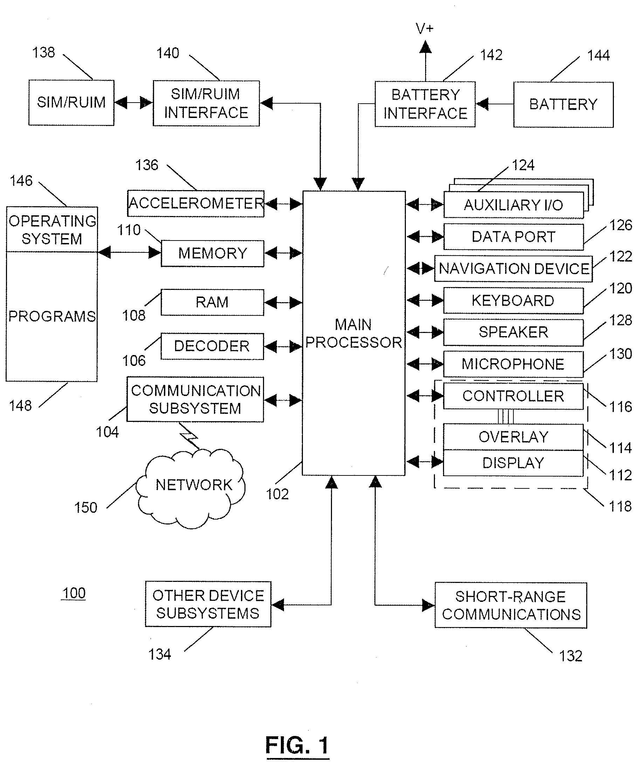

Referring first to FIG. 1, a block diagram of components of the handheld electronic communication device 100 is shown.

The display 112 comprises one or more display devices which allow an upper and a lower portion of the display to be separately or concurrently illuminated. In one example, the display 112 is an organic light emitted diode (OLED) device having pixels that can be selectively illuminated in groups or individually. In another example, the display 112 is a liquid crystal display (LCD) with light-emitting diode (LED) backlighting which can selectively illuminate individual or clusters of pixels. In yet another example, the display 112 is an LCD with two or more cold cathode fluorescent lamps (CCFLs) to provide selective backlighting for two or more sections of the display 112. Notwithstanding these examples, the display can comprise any type of device or combination of devices that can make up separately illuminatable display regions.

The display 112 is also configurable to emit different levels of brightness or degrees of illumination. The degrees of illumination of the upper and lower portions of the display 112 can be separately controlled by the processor 102. In some examples, depending on the type of display device being used, the relative degrees of illumination may be changed by adjusting the brightness, the contrast, the color balance or a combination of these factors.

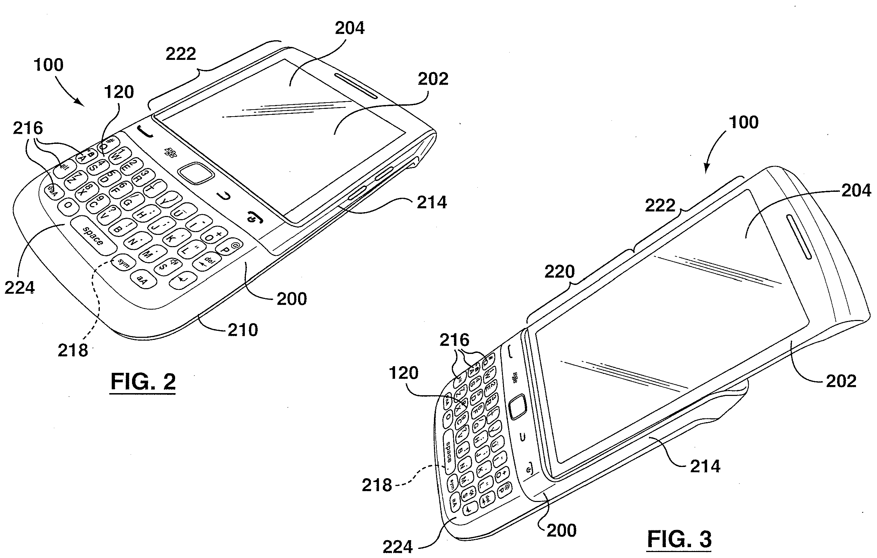

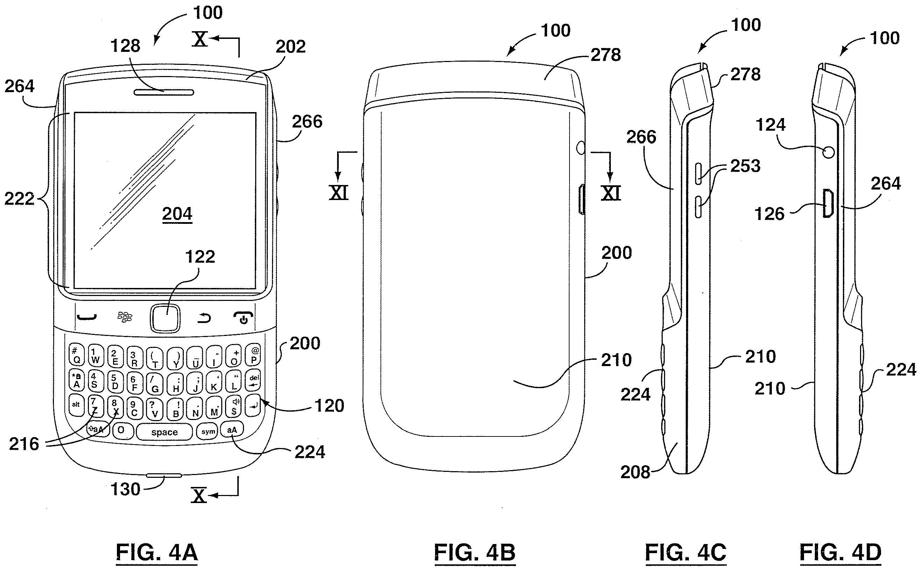

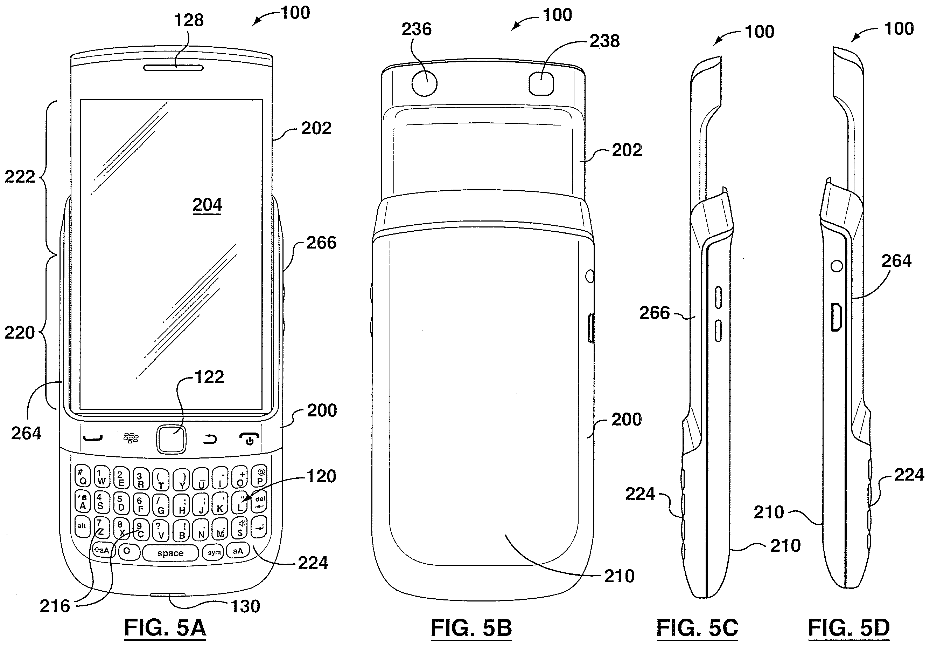

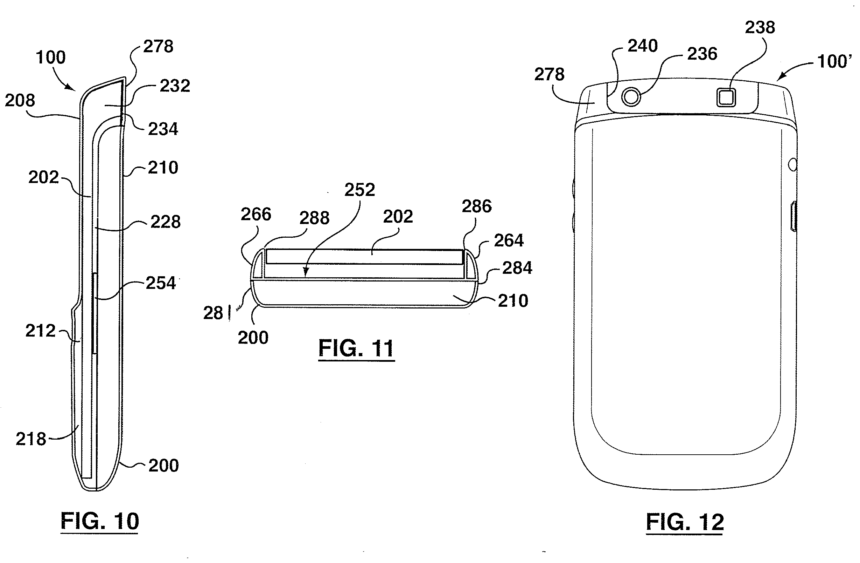

Referring to Figures 2, 3, 4A-4D and 5A-5D views of an example of the handheld electronic communications device 100 are shown. The handheld electronic communication device 100 includes a first assembly such as a housing assembly 200 having a longitudinal axis and a sliding display screen assembly 202 that is mounted to the housing to slide axially between a first or retracted position as shown in Figures 2 and 4A-4D and a second or extended position as shown in Figures 3 and 5A-5D. The housing assembly 200 includes
a base 210 and a keyboard support member 224 in which a plurality of forward facing user input keys 216 of the keyboard 120 are disposed. A cavity 218, as best seen in sectional view of Figure 10, and indicated by dashed reference line in Figure 2 and 3, is defined between a front surface of the base 210 and a back surface of the keyboard support member 224. The sliding display assembly 202 includes a display screen 204 (which in one example includes display 112 and touch sensitive overlay 114) on its front face. The display screen 204 has a first or lower portion 220 and a second or upper portion 222. When the display assembly 202 is in the retracted position as shown in Figure 2, the lower portion 220 of the display screen 204 is received within the cavity 218 of housing assembly 200 underlying the keyboard support member 224 such that the lower portion 220 is hidden from view, and the upper portion 222 of the display screen 204 extends from an open end of the cavity 218 and is exposed and viewable from a front of the device. When the display assembly 202 is in the extended position as shown in Figure 3, the lower portion 220 of the display assembly is positioned out of the cavity 218 such that both the lower portion 220 and the upper portion 222 of the display screen 204 are viewable.

The sliding display assembly 202 may in at least some examples enable a compact size for the handheld electronic communication device 100 when the display assembly is retracted while providing a larger viewable display screen area when the display assembly is extended. The keyboard 120 is exposed and fully accessible from a front of the handheld electronic communication device 100 when the display assembly 202 is in both the retracted and extended positions.

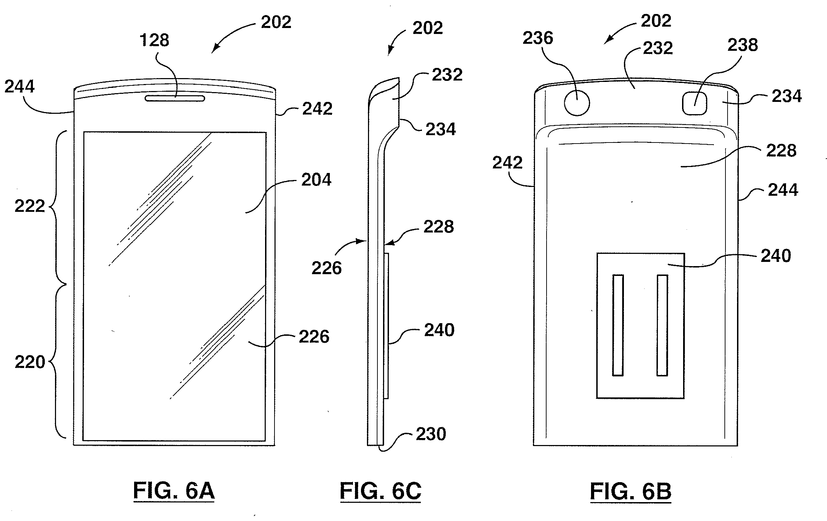

The housing assembly 200 and the display assembly 202 may both house components of the handheld electronic communication device 100, including the components described and shown in FIG. 1. Referring to Figures 6A-6C, an example of the display assembly 202 will now be explained in greater detail. The display assembly 202 has a first or lower terminal end 230 that is received within the housing cavity 218 at least when the display assembly 202 is in the retracted position, and a second or upper terminal end 232 at its opposite end. The display assembly 202 has a substantially planar front face 226 which includes a viewable surface of the display screen 204, an opposite facing back face 228 and longitudinal side edges 242 and 244. The back face 228 is substantially planar over most of the length of the display assembly 202, however the upper terminal end 232 defines an enlarged boss portion 234 that has a back face that is spaced further back from the display assembly front face 226 than the rest of the back face 228. In one example, the enlarged boss portion 234 houses an optical sensor 236 that faces outward from the back face of the display assembly 202 for capturing one or both of photo or video image data. A flash or illuminator 238 may also be housed in the enlarged boss portion 234 for illuminating objects that are the subject of image capture by the optical sensor 236.

As can be seen in the retracted position back view of Figure 4B and the extended position back view of Figure 5B, in at least some examples the optical sensor 236 and illuminator 238 are concealed by the housing assembly 200 when the display assembly 202 is in its retracted position, but are exposed when the display assembly 202 is in its extended position.

Referring again to Figures 6A to 6C, in the illustrated example, device speaker 128 is housed in the enlarged boss portion 234 at the upper end 232 of the display assembly 202, and is oriented to output sound from the upper end 232 of the front face 226. In some examples, a sliding assembly member 240 is provided on the back face 228 of the display assembly 202 for sildably mounting the display assembly to a front face of the housing base 210.

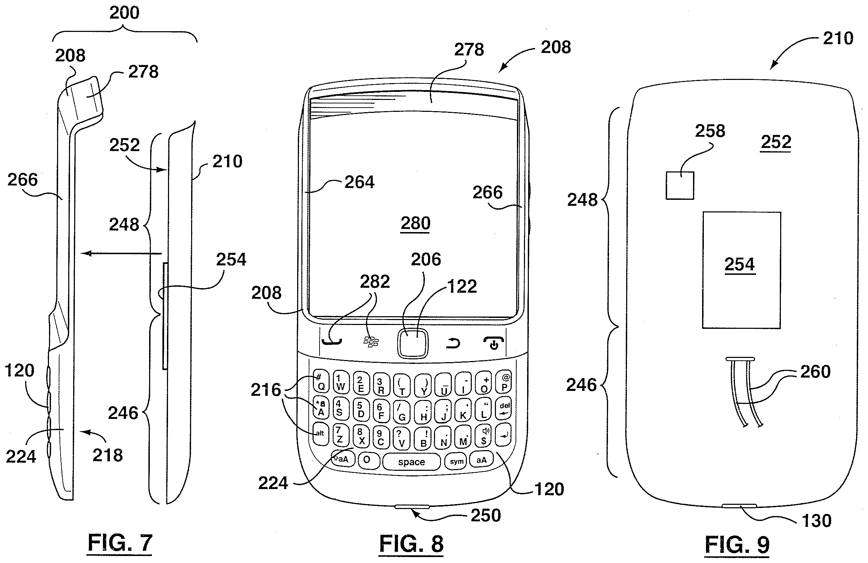

Referring to Figures 7-9, an example of the housing assembly 200 will now be explained in greater detail. As noted above, the housing assembly 200 includes a base 210 and a keyboard support member 224. In one example, the keyboard support member 224 is part of a front housing unit 208. As shown in Figures 7 and 9, base 210 has substantially planar front face 252 with a first or lower section 246 and a second or upper section 248. The front face of the base lower section 246 is arranged in spaced opposition to the keyboard support member 224 to form cavity 218, and the base upper section 248 extends from the first section 246 beyond the open end of the cavity 218. The front face of upper section 248 faces the back face 228 of the display assembly 202. In some examples of handheld communication device 100, many of the components of the device shown in Figure 1 are located within the base 210 including for example the main processor 102, RAM 108, memory 110, and communication subsystems 104 and 132. In one example, microphone 130 is located at a lower end of the base as illustrated in Figure 9. An opening or slot 250 (see Figure 8) may be provided in a lower end of the front housing unit 208 in alignment with the microphone 130. One or more antennas of one or both of the communications subsystem 104 and 132 may also be positioned at or near the lower end of the base 210. In some example embodiments, one or more data ports 126 and auxiliary I/O interfaces 124 can be provided on side edges of the base 210. For example, as seen in Figure 4D, a data port 126 in the form of a USB port and an I/O interface 124 in the form of an audio/microphone jack are provided on a side edge of the upper section of base 210. As seen in Figure 4C, physical user input buttons such as volume control buttons 253 that are operatively connected to the processor 102 can also be located on side edges of the base 210.

Referring again to Figure 9, a slider assembly member 254 can be provided on the front face 252 of the base 210. The slider assembly member 254 of the base 210 cooperates with the slider assembly member 240 of the sliding display assembly 202 to collectively provide a sliding assembly 256 (Figure 10) that slidably connects the display assembly 202 to the base 210. Any different number of known sliding assembly configurations could be used to implement sliding assembly 256, including but not limited to slider assemblies that incorporate one or both of springs and or electric motors to assist in moving the sliding component and retaining the sliding component in a desired position. In at least some examples a flex connector 260 extends between the base 210 and the sliding assembly 256 to provide an electrical link between components housed within the display assembly 202 and components housed within the base 210. In some example configurations, other communications links could be provided between base components and display assembly components, including for example optical or RF links.

One or more position sensors 258 can be provided on the base 210 or the display assembly 202 for detecting the position of the display assembly 202 relative to the housing assembly 200. For example, a Hall effect sensor may be utilized to detect a position or positions of the display assembly 202 relative to the housing assembly 200. According to another example, a mechanical switch or switches are used.

With reference to Figures 7 and 8, the keyboard support member 224 forms a lower portion of front housing unit 208 and supports keyboard 120.

In an example, the front housing unit 208 includes opposed first and second sidewalls 264 and 266 that extend from the keyboard support member 224 along respective axial side edges of the upper section 248 of base 210. At the upper end of the housing unit, the sidewalls 264 and 266 are connected by a cross member 278. The cross member 278, sidewalls 264 and 266 and keyboard support member 224 collectively define a rectangular opening 280 through which the display assembly 202 can be viewed. Referring to the sectional view of Figure 11, in one example sidewalls 264 and 266 each protrude away from the front face 252 of base 210 so that the screen assembly 202 is located between the sidewalls 264 and 266. As can be seen in Figure 4A, when the screen assembly 202 is in its retracted position, the upper portion 222 of the display screen 204 is located between sidewalls 264 and 266 with the side edges of the screen assembly 202 concealed by sidewalls 264 and 266. In the extended position, as seen in Figure 5A, at least part of the upper portion 222 of the display screen extends beyond the upper ends of the sidewalls 264.

Referring again to the sectional view of Figure 11, in one example, an outer surface of the sidewall 266 together with an outer side edge surface 282 of the base 210 forms one side edge of the communication device 100 and an outer surface of the sidewall 264 together with an outer side edge surface 284 of the base 210 forms an opposite side edge of the communication device 100. In one example, along the sides of rectangular opening 280 (Figure 8) the terminal edges 286, 288 of the sidewalls 264, 266 that face away from the front surface 252 of the base 210 are located in plane that is slightly higher than a front viewing surface of the display screen 204. In another example, along the sides of rectangular opening 280 the terminal edges 286, 288 of the sidewalls 264, 266 that face away from the front surface 252 of the base 210 are located in plane that is substantially flush with a front viewing surface of the display screen 204.

Referring again to Figures 7, 8 and 10, in one example the cross member 278 that extends between the upper ends of the sidewalls 264, 266 is offset back towards the base 210 relative to the sidewalls 264, 266 such that the cross member 278 is located behind the back face of the enlarged boss portion 234 of the upper end 232 of the display assembly 202. In such an example, the cross member 278 forms the upper terminal end of the housing assembly 200 and provides a recess in the housing assembly 200 for receiving the enlarged display assembly boss portion 234 when the display assembly is in its retracted position, and conceals the optical sensor 236 and illuminator 238 that are located the back face of the enlarged boss portion 234. As seen in Figure 4C and 4B, when the display assembly 202 is in its retracted position its upper end 232 is coterminous with the upper end of the housing assembly 200 such that the housing assembly 200 covers substantially the entire back surface of the display assembly 202.

In one example, the sidewalls 264, 268 protect the side edges of the display assembly 202 when the display assembly is in its retracted position, and also provide opposed surfaces for gripping the handheld electronic communication device 100 between the palm and fingers of a hand without interfering with movement of the display assembly. In one embodiment the sidewalls 264, 268 are respectively spaced apart such that a user can grip one side edge of the communication device 100 with fingers of a hand, grip the opposite side edge with the palm of the same hand and have the thumb free to either extend or retract the display assembly 202 or actuate the navigation device 122.

As indicated above the communication device 100 may include one or more sensors 258 that indicate one or more relative positions of the display assembly 200 to the processor 102. In examples the processor 102 is configured to modify operational characteristics of the display screen 204 in dependence on the sensed position of display assembly 200. In one example embodiment, one or more sensors 258 are used to indicate if the display screen 204 is extended with the entire viewable area of display screen 204 is visible or is retracted with the lower portion 220 of the display screen hidden from view and only the upper portion 222 visible.

In one example, where the display screen 204 is an OLED (organic light emitting diode) display or is an LCD with LED backlighting having pixels that can be selectively illuminated, when the processor 102 detects that the display assembly 204 is retracted, the processor 102 can disable the illumination of pixels that are in the lower portion 220 of the display screen 204 that is received within recess 218, while still enabling illumination of the pixels of upper display screen portion 222. In another example, where the display screen 204 is an LCD with separately illuminatable backlights, when the processor 102 detects that the display assembly 202 is retracted, the processor 102 can disable the illumination of the backlight for the lower portion 220 of the display screen 204 that is received within the recess 218 while still enabling illumination of the pixels of the upper display screen portion 222. The feature of enabling the upper portion 222 of the display screen 204 to be active while disabling the lower portion 220 of the display screen so that it is not active when retracted can in some configurations facilitate power conservation but may also result in differential aging of different portions of the display screen 204 due to the different durations of time during which the different portions are illuminated. Over time, the differential aging may result in different illumination intensities between the upper and lower screen portions if the differential is not accounted for.

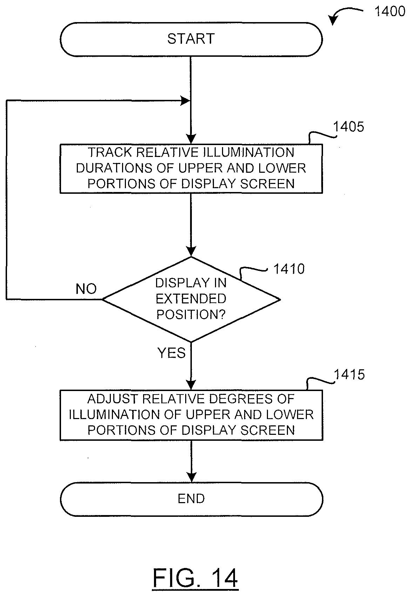

Referring to FIG. 14, a method 1400 for compensating for the differential aging of the display screen 204 is illustrated . The method of Figure 14 may for example be implemented by the processor 102 as configured by operating system software 146 or other software programs 148 or a combination thereof. In step 1405, the processor 102 is configured to track the relative durations of time for which the upper 222 and lower 220 portions of the display screen 204 are active or illuminated based on information from one or more screen position sensors 258 and clock information. In one example, the processor is configured to track the duration of time during which the screen is illuminated (e.g. when pixels on the display screen are activated to display information) and the position of the display screen 204 during these periods. As illumination of the lower portion 220 is disabled when the display assembly 202 is retracted, the relative illumination durations of the upper and lower portions can be determined from duration of time during which the display screen 204 is illuminated and extended, and the duration of time during which the display screen 204 is illuminated and retracted. One or more timers or counters can be used to measure the length of time for which the display screen 204 is illuminated and retracted, and the length of time for which the display screen 204 is illuminated and extended.. The timer or counter may be implemented as hardware or software components (or combinations thereof) on the handheld electronic device 100. The timer or counter may be calibrated using external references such as a network clock signal or a GPS clock signal, for example.

In some examples, the processor 102 is configured to store in persistent memory 110 illumination information that represents the cumulative total time that the display screen 204 is active or illuminated in the extended position (such "active extended time" being representative of an illumination duration for both the upper portion 222 and the lower portion 220) and the cumulative total time that the display screen is active or illuminated in the retracted position (such "active retracted time" being representative of an illumination duration for the upper portion 222 alone while the lower portion 220 is inactive) In example embodiments, the cumulative "active extended time" and "active retracted time" totals stored in memory 110 can be updated at periodic intervals while the display screen 204 is actively displaying information, or at points when the display screen 204 goes from an active display state to an inactive or blank state, or combinations of the forgoing.

In some examples the display screen brightness or illumination level can be adjusted by a user of the device to conserve battery power or adjust for different lighting conditions. In some example embodiments, in addition to simply tracking when the display screen is active in the extended or retracted positions, the processor is also configured to factor in the brightness or illumination level during each period of illumination for the upper and lower portions 222, 220 of the display screen 204 when updating the cumulative "active extended time" and "active retracted time" totals. In this example, the illumination duration is adjusted by an illumination factor that is based on the currently set illumination level during the period of illumination. For example, if it has been determined that the display screen 204 ages 25% slower when the display is illuminated at 75% of its maximum brightness, for any period of illumination at this level of illumination, the relative illumination duration will be 25% less than the actual illumination duration. This factor by which the actual illumination duration is reduced is referred to herein as the illumination factor. In an example embodiment, the illumination factors for different levels of brightness are predetermined for an average display device and are stored in the handheld electronic device memory 110 and the illumination duration for a tracked period of illumination is adjusted by the appropriate illumination factor when updating the cumulative active extended time" and "active retracted time" totals. Alternatively, an equation for determining the illumination factor based on the configured illumination level can be used, and then the calculated illumination factor applied to adjust the illumination duration before adding the duration to the total "active extended time" or "active retracted time" as the case may be.

Referring again to FIG. 14, in step 1410, when the display screen 204 is extended as seen in FIG. 3, the processor, in step 1415, adjusts the relative degrees of illumination of one or both of the upper and lower portions 222, 220 of the display screen 204 by a compensation factor to compensate for the differential aging of the two portions to compensate for the fact that in the absence of compensation, as portions of the display screen 204 age, the effective degree of illumination (i.e. the degree of illumination outputted and perceived by a user) for portions that have been illuminated a greater amount may be lower than the effective degree of illumination for display screen portions that have been illuminated a lesser amount.

In one example, the compensation factor applied by the processor is configured to dim the degree of illumination of the lower portion 220 based on the difference in relative illumination durations between the upper and lower portions 222, 220. In another example, the processor is configured to increase the effective degree of illumination of the upper portion 222 to compensate for the difference in illumination durations. In yet another example, the processor adjusts the relative degrees of the illumination of both the upper and lower portions based on the relative illumination durations. In some examples, the compensation factor is determined using the "active extended time" and "active retracted time" as inputs to an equation derived from average performance characteristics of test display screens. In some examples the compensation factor is determined using the "active extended time" and "active retracted time" as inputs for a look-up table stored in the device memory that is derived from average performance characteristics of test display screens.

In one example, the processor adjusts the degrees of illumination of both the upper and lower portions based on an aging factor. The aging factor is based on the aging characteristics of the display screen 204 and changes as the relative duration of illumination changes. In one example, the aging factor may be a ratio of the current maximum illumination achievable with the aged display device to the original maximum illumination. In another example, the aging factor may be an amount by which the illumination of the display device must be increased or decreased to achieve a predetermined effective degree of illumination. The aging factors may be predetermined by test measurements of the illumination output of a representative display screen, and are stored in the memory 110 of the handheld electronic device 100.

Accordingly, based on the relative cumulative illumination durations between the upper and lower portions 222, 220 and the corresponding aging factors, the processor adjusts the degrees of illumination of pixels within one or both of the upper portion 222 and lower portion 220 to mitigate the perceivable difference in aging between the upper and lower portions.

In some examples, the processor is configured to only adjust the degrees of illumination in step 1415 after a predetermined display screen age threshold has been reached. By way of example , prior to performing step 1415, a qualification step may be performed to determine if a cumulative illumination duration threshold based on one or both of the "active retracted duration" or "active extended duration" has reached a threshold cumulative time, and if not, then the age compensation of step 1415 is not performed. In other examples, the processor is configured to only adjust the degrees of illumination in step 1415 after a predetermined device age has been exceeded. The predetermined illumination duration or the predetermined device age may, for example, represent an average display device usage or aging after which must be exceeded by a perceivable difference is noticeable in the display output.

In accordance with the claimed invention, a user may manually adjust the aging factors used when adjusting the relative degrees of illumination of the upper and lower portions of the display screen. The processor can be configured to enter the handheld electronic device into a calibration mode whereby the user may adjust the degrees of illumination of the upper and lower portions until the difference in brightness between the upper and lower portions are minimal. Once this process is complete, the processor can store a correction factor or adjust the aging factors for use in future adjustments to the relative degrees of illumination.

In one example, the display device is an OLED or other device comprising different types of subpixels such as red, green and blue subpixels. Different color subpixels may be susceptible to different aging characteristics, and to compensate for this the processor may be configured to adjust the relative degrees of illumination for the different subpixels using different or independent compensation factors for the different subpixel colors to compensate for differential aging of the different subpixels.

In some example applications the above described system provides a relatively low overhead age compensation system for a display screen. As the method relies on merely tracking if the display screen is active in the retracted or extended positions, relatively little processor capacity is required for implementation. In some example embodiments, more sophisticated methods may be sued for tracking the relative illumination durations of the
upper and lower portions 222, 220 of the display screen 204, including for example directly tracking when the pixels or backlighting of the upper portion 222 is activated and when pixels or backlighting of the lower portion 2220 is activated.

Figure 12 illustrates a back view of another example of a handheld electronic communication device 100' that is substantially identical to handheld electronic communication device 100 except the back of housing assembly 200 defines an opening 290 that exposes optical sensor 236 and illuminator 238 when display assembly 202 is in its retracted position. The opening 290, which for example could be provided by omitting all or a portion of the cross member 278, facilitates the taking of picture and video when the display assembly 202 is in the retracted position.

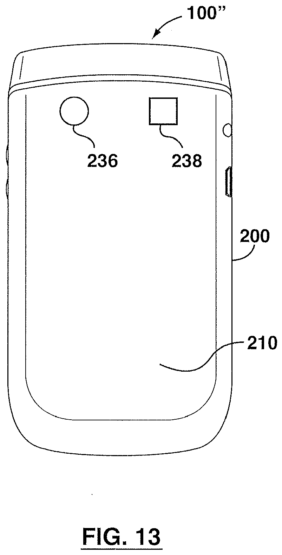

Figure 13 illustrates a back view of another example of a handheld electronic communication device 100" that is substantially identical to handheld electronic communication device 100 except that the image sensor 236 and illuminator 238 are located on the back of housing assembly 200 rather than the sliding display assembly 202. In such a configuration, the image sensor 236 and illuminator 238 are exposed regardless of the position of the display assembly.

In addition to the sliding display screen configurations described above, the above described examples for compensating differential aging on a display screen can also be applied to other portable electronic device configurations in which the device can be used in a first position with the display screen partially hidden and in a second position with a greater area of the display screen exposed. For example, the age compensating examples described herein could be applied to portable electronic devices having rotating or pivoting display screens in which the display screen is partially hidden in one position (a retracted position) and fully exposed in another position (an extended position). Further, the differential age compensating examples described herein could be applied to portable electronic devices in which the assembly that covers the display screen is something other than a housing assembly having a cavity. For example, the obscuring assembly could be a movable portion such as a keyboard assembly or other member that can partially hide the display screen in one position and fully expose the display screen in another position. For example, a portable electronic device could have a movable keyboard assembly that is located partially over the display screen in a first position and slides or rotates to a second position to expose all of the display screen. In one example, the portable electronic device could have a flip-style keypad assembly that covers part of the display screen in a first position and exposes all of the display screen in a second position, with a position sensor being used to determine when the display screen was partially exposed or fully exposed.

While the present disclosure is described primarily in terms of methods, the present disclosure is also directed to a portable electronic device configured to perform at least part of the methods. The portable electronic device may be configured using hardware modules, software modules, a combination of hardware and software modules, or any other suitable manner. The present disclosure is also directed to a pre-recorded storage device or computer-readable medium having computer-readable code stored thereon, the computer-readable code being executable by at least one processor of the portable electronic device for performing at least parts of the described methods.

While the embodiments described herein are directed to particular implementations of the hand held electronic communication device, it will be understood that modifications and variations may occur to those skilled in the art.

## Claims

1. A method for driving a display screen of a handheld electronic device (100), the device (100) comprising:
a first assembly (200);
a display assembly (202) including a display screen (204), the display assembly (202) and first assembly (200) being movable relative to each other between a first position in which a first portion (220) of the display screen (204) is hidden from view by the first assembly while a second portion (222) of the display screen (204) is viewable and a second position in which both the first portion (220) and second portion (222) are viewable; and
a position sensor (258) for providing position information indicating if the display assembly (202) and the first assembly (200) are in the first position or the second position;
wherein illumination of the first portion of the display screen is disabled and illumination of the second portion of the display screen is enabled in the first position and illumination of both the first and second portions is enabled in the second position;
the method being **characterized in**:
compensating for differential aging of the display screen (204) by
allowing a user to manually adjust degrees of illumination of the first portion and the second portion until a difference in brightness between the first portion and the second portion is minimal; and
storing a correction factor or adjusting the aging factors for use in future adjustments to the relative degrees of illumination;
tracking overtime relative illumination durations of the first and second portions;
wherein the tracking over time the relative illumination durations comprises determining in dependence on information received from the position sensor if the first portion of the display screen is hidden from view or is viewable when the display screen is illuminated; and
based on the relative illumination durations, adjusting a relative degree of illumination of one or both of the first portion and the second portion when the display screen is in the second position to compensate for differential aging between the first and second portion.

2. The method of claim 1 wherein tracking over time relative illumination durations comprises updating in a memory of the handheld electronic device cumulative time totals that track a total time that the display screen is illuminated when the first portion of the display screen is viewable and a total time that the display screen is illuminated when the first portion of the display screen is hidden from view.

3. The method of claim 2 wherein an illumination level of the display screen can be set at different values over time, and tracking over time the relative illumination durations includes adjusting the illumination durations in dependence on the set illumination levels.

4. The method of any one of claims 1 to 3 wherein adjusting the relative degree of illumination comprises dimming the first portion based on the relative illumination durations of the first portion and the second portion to compensate for the differential aging of the first and second portions.

5. The method of any one of claims 1 to 4 comprising, prior to adjusting a relative degree of illumination, determining if a display screen age threshold has been reached and if not then forgoing adjusting a relative degree of illumination such that the relative degree of illumination is only adjusted after the display screen age threshold has been exceeded.

6. The method of any one of claims 1 to 5 wherein the display screen age threshold is based on one or both of a total cumulative illumination time of the display screen and an age of the handheld electronic device.

7. The method of any one of claims claim 1 to 6 wherein the display screen is a sliding display screen, the first position corresponding to a retracted position of the display screen and the second position corresponding to an extending position of the display screen.

8. A handheld electronic device (100) comprising:
a first assembly (200);
a display assembly (202) including a display screen (204), the display assembly (202) and first assembly (200) being movable relative to each other between a first position in which a first portion (220) of the display screen (204) is hidden from view by the first assembly while a second portion (222) of the display screen (204) is viewable and a second position in which both the first portion (220) and second portion (222) are viewable;
a processor (102) configured to control operation of the display screen;
a position sensor (258) for providing position information to the processor (102) indicating if the display assembly (202) and the first assembly (200) are in the first position or the second position;
wherein the processor (102) is configured to disable illumination of the first portion of the display screen and enable illumination of the second portion of the display screen when the position information indicates the first position, and enable illumination of both the first and second portions when the position information indicates the second position;
the device being **characterized by**:
the processor being configured to compensate for differential aging of the display screen (204) by allowing a user to manually adjust degrees of illumination of the first portion and the second portion until a difference in brightness between the first portion and the second portion is minimal;
and the processor being configured to store a correction factor or to adjust the aging factors for use in future adjustments to the relative degrees of illumination;
the processor being configured to track over time relative illumination durations of the first portion and the second portion and adjust, in dependence on the tracked relative illumination durations, a relative degree of illumination of one or both of the first portion and the second portion when the display screen is in the second position to compensate for differential display screen aging between the first and second portions;
wherein the processor is configured to track over time the relative illumination durations of the first portion or the second portion based on a position as sensed by the position sensor when the display screen is illuminated.

9. The handheld device of claim 8 wherein the processor is configured to update in a memory of the handheld electronic device cumulative time totals that track a total time that the display screen (204) is illuminated when in the second position and a total time that the display screen is illuminated when in the first position.

10. The handheld electronic device of claims 8 or 9 wherein an illumination level of the display screen can be set at different values over time, and the processor is configured to adjust the illumination durations in dependence on the set illumination levels.

11. The handheld electronic device of any one of claims 8 to 10 wherein the processor (102) is configured to reduce the relative degree of illumination of the first portion by a compensation factor to compensate for the differential display screen aging.

12. The handheld electronic device of any one of claims 8 to 11 wherein the display screen comprises pixels that are made up of different coloured subpixels and adjusting the relative degree of illumination comprises adjusting, based on colour, degrees of illuminations of the different subpixels in the display screen (204) to compensate for the differential aging of the different subpixels.

13. The handheld electronic device of any one of claims 8 to 12 wherein the display screen comprises an organic light-emitted diode (OLED) device, and the first assembly is a housing assembly having a cavity (218), and the display assembly is slidably mounted to the housing assembly, the first position corresponding to a retracted position of the display assembly in which the first portion of the display screen is received within the cavity and the second portion of the display screen is viewable outside of the cavity, and the second position corresponds to an extended position of the display screen assembly in which the first portion and second portion of the display screen are both viewable outside of the cavity.

## Patentansprüche

1. Verfahren zum Ansteuern eines Anzeigebildschirms einer tragbaren elektronischen Vorrichtung (100), wobei die Vorrichtung (100) umfasst:
eine erste Anordnung (200);
eine Anzeigeanordnung (202), die einen Anzeigebildschirm (204) enthält, wobei die Anzeigeanordnung (202) und die erste Anordnung (200) relativ zueinander zwischen einer ersten Position, in der ein erster Abschnitt (220) des Anzeigebildschirms (204) durch die erste Anordnung verdeckt ist, während ein zweiter Abschnitt (222) des Anzeigebildschirms (204) sichtbar ist, und einer zweiten Position, in der sowohl der erste Abschnitt (220) und der zweite Abschnitt (222) sichtbar sind, beweglich sind; und
einen Positionssensor (258) zum Bereitstellen von Positionsinformationen, die anzeigen, ob sich die Anzeigeanordnung (202) und die erste Anordnung (200) in der ersten Position oder der zweiten Position befinden;
wobei in der ersten Position eine Beleuchtung des ersten Abschnitts des Anzeigebildschirms deaktiviert ist und eine Beleuchtung des zweiten Abschnitts des Anzeigebildschirms aktiviert ist und in der zweiten Position eine Beleuchtung sowohl des ersten als auch des zweiten Abschnitts aktiviert ist;
wobei das Verfahren **gekennzeichnet ist durch**:
Kompensieren von differenziellem Altern des Anzeigebildschirms (204) **durch** Ermöglichen, dass ein Benutzer Beleuchtungsniveaus des ersten Abschnitts und des zweiten Abschnitts manuell anpasst, bis eine Helligkeitsdifferenz zwischen dem ersten Abschnitt und dem zweiten Abschnitt minimal ist;
und
Speichern eines Korrekturfaktors oder Anpassen der Alterungsfaktoren zur Verwendung bei zukünftigen Anpassungen der relativen Beleuchtungsniveaus;
zeitliches Nachverfolgen von relativen Beleuchtungsdauern des ersten und des zweiten Abschnitts;
wobei das zeitliche Nachverfolgen der relativen Beleuchtungsdauern ein Ermitteln umfasst, ob der erste Abschnitt des Anzeigebildschirms verdeckt ist oder sichtbar ist, wenn der Anzeigebildschirm beleuchtet ist, in Abhängigkeit von vom Positionssensor empfangenen Informationen; und
auf Grundlage der relativen Beleuchtungsdauern, Anpassen eines relativen Beleuchtungsniveaus entweder des ersten Abschnitts und/oder des zweiten Abschnitts umfasst, wenn sich der Anzeigebildschirm in der zweiten Position befindet, um ein differenzielles Altern zwischen dem ersten und dem zweiten Abschnitt zu kompensieren.

2. Verfahren nach Anspruch 1, wobei das zeitliche Nachverfolgen von relativen Beleuchtungsdauern ein Aktualisieren, in einem Arbeitsspeicher der tragbaren elektronischen Vorrichtung, von kumulativen Gesamtzeiten, die eine Gesamtzeit, für die der Anzeigebildschirm beleuchtet ist, wenn der erste Abschnitt des Anzeigebildschirms beleuchtet ist, wenn der erste Abschnitt des Anzeigebildschirms sichtbar ist, und eine Gesamtzeit nachverfolgen, für die der Anzeigebildschirm beleuchtet ist, wenn der erste Abschnitt des Anzeigebildschirms verdeckt ist.

3. Verfahren nach Anspruch 2, wobei ein Beleuchtungsniveau des Anzeigebildschirms zeitlich auf verschiedene Werte festgelegt werden kann und das zeitliche Nachverfolgen der relativen Beleuchtungsdauern ein Anpassen der Beleuchtungsdauern in Abhängigkeit von den festgelegten Beleuchtungsniveaus enthält.

4. Verfahren nach einem der Ansprüche 1 bis 3, wobei das Anpassen des relativen Beleuchtungsniveaus ein Abblenden des ersten Abschnitts auf Grundlage der relativen Beleuchtungsdauern des ersten Abschnitts und des zweiten Abschnitts umfasst, um das differenzielle Altern des ersten und des zweiten Abschnitts zu kompensieren.

5. Verfahren nach einem der Ansprüche 1 bis 4, das vor einem Anpassen eines relativen Beleuchtungsniveaus ein Ermitteln umfasst, ob eine Altersgrenze des Anzeigebildschirms erreicht wurde, und falls nicht, dann Verzichten auf ein Anpassen eines relativen Beleuchtungsniveaus, sodass das relative Beleuchtungsniveau nur angepasst wird, nachdem die Altersgrenze des Anzeigebildschirms überschritten wurde.

6. Verfahren nach einem der Ansprüche 1 bis 5, wobei die Altersgrenze des Anzeigebildschirms auf entweder einer kumulativen Gesamtbeleuchtungszeit des Anzeigebildschirms und/oder einem Alter der tragbaren elektronischen Vorrichtung basiert.

7. Verfahren nach einem der Ansprüche 1 bis 6, wobei der Anzeigebildschirm ein verschiebbarer Anzeigebildschirm ist, wobei die erste Position einer eingezogenen Position des Anzeigebildschirms entspricht und die zweite Position einer ausgezogenen Position des Anzeigebildschirms entspricht.

8. Tragbare elektronische Vorrichtung (100), umfassend:
eine erste Anordnung (200);
eine Anzeigeanordnung (202), die einen Anzeigebildschirm (204) enthält, wobei die Anzeigeanordnung (202) und die erste Anordnung (200) relativ zueinander zwischen einer ersten Position, in der ein erster Abschnitt (220) des Anzeigebildschirms (204) durch die erste Anordnung verdeckt ist, während ein zweiter Abschnitt (222) des Anzeigebildschirms (204) sichtbar ist, und einer zweiten Position, in der sowohl der erste Abschnitt (220) und der zweite Abschnitt (222) sichtbar sind, beweglich sind;
einen Prozessor (102), der ausgelegt ist, einen Betrieb des Anzeigebildschirms zu steuern;
einen Positionssensor (258) zum Bereitstellen von Positionsinformationen an den Prozessor (102), die anzeigen, ob sich die Anzeigeanordnung (202) und die erste Anordnung (200) in der ersten Position oder der zweiten Position befinden;
wobei der Prozessor (102) ausgelegt ist, eine Beleuchtung des ersten Abschnitts des Anzeigebildschirms zu deaktivieren und eine Beleuchtung des zweiten Abschnitts des Anzeigebildschirms zu aktivieren, wenn die Positionsinformationen die erste Position anzeigen, und
eine Beleuchtung sowohl des ersten als auch des zweiten Abschnitts aktiviert ist, wenn die Positionsinformationen die zweite Position anzeigen;
wobei das Verfahren **dadurch gekennzeichnet ist, dass**:
der Prozessor ausgelegt ist, differenzielles Altern des Anzeigebildschirms (204) dadurch zu kompensieren, zu ermöglichen, dass ein Benutzer Beleuchtungsniveaus des ersten Abschnitts und des zweiten Abschnitts manuell anpasst, bis eine Helligkeitsdifferenz zwischen dem ersten Abschnitt und dem zweiten Abschnitt minimal ist;
und der Prozessor ausgelegt ist, einen Korrekturfaktor zu speichern oder die Alterungsfaktoren zur Verwendung bei zukünftigen Anpassungen der relativen Beleuchtungsniveaus anzupassen;
wobei der Prozessor ausgelegt ist, relative Beleuchtungsdauern des ersten Abschnitts und des zweiten Abschnitts zeitlich nachzuverfolgen und abhängig von den nachverfolgten relativen Beleuchtungsdauern ein relatives Beleuchtungsniveau entweder des ersten Abschnitts und/oder des zweiten Abschnitts anzupassen, wenn sich der Anzeigebildschirm in der zweiten Position befindet, um ein differenzielles Altern des Anzeigebildschirms zwischen dem ersten und dem zweiten Abschnitt zu kompensieren;
wobei der Prozessor ausgelegt ist, die relativen Beleuchtungsdauern des ersten Abschnitts oder des zweiten Abschnitts auf Grundlage einer Position zeitlich nachzuverfolgen, wie sie vom Positionssensor erfasst wird, wenn der Anzeigebildschirm beleuchtet ist.

9. Tragbare Vorrichtung nach Anspruch 8, wobei der Prozessor ausgelegt ist, in einem Arbeitsspeicher der tragbaren elektronischen Vorrichtung kumulative Gesamtzeiten zu aktualisieren, die eine Gesamtzeit, für die der Anzeigebildschirm (204) beleuchtet ist, wenn er sich in der zweiten Position befindet, und eine Gesamtzeit nachverfolgen, für die der Anzeigebildschirm beleuchtet ist, wenn er sich in der ersten Position befindet.

10. Tragbare elektronische Vorrichtung nach Anspruch 8 oder 9, wobei ein Beleuchtungsniveau des Anzeigebildschirms zeitlich auf verschiedene Werte festgelegt werden kann und der Prozessor ausgelegt ist, die Beleuchtungsdauern ein Anpassen der Beleuchtungsdauern in Abhängigkeit von den festgelegten Beleuchtungsniveaus anzupassen.

11. Tragbare elektronische Vorrichtung nach einem der Ansprüche 8 bis 10, wobei der Prozessor (102) ausgelegt ist, das relative Beleuchtungsniveau des ersten Abschnitts um einen Kompensationsfaktor zu reduzieren, um das differenzielle Altern des Anzeigebildschirms zu kompensieren.

12. Tragbare elektronische Vorrichtung nach einem der Ansprüche 8 bis 11, wobei der Anzeigebildschirm Pixel umfasst, die aus verschiedenen farbigen Subpixeln bestehen, und das Anpassen des relativen Beleuchtungsniveaus ein Anpassen von Beleuchtungsniveaus der verschiedenen Subpixel im Anzeigebildschirm (204) auf Grundlage von Farbe umfasst, um das differenzielle Altern der verschiedenen Subpixel zu kompensieren.

13. Tragbare elektronische Vorrichtung nach einem der Ansprüche 8 bis 12, wobei der Anzeigebildschirm eine organische lichtemittierende Diodenvorrichtung (OLED-Vorrichtung) umfasst und die erste Anordnung eine Gehäuseanordnung mit einem Hohlraum (218) ist und die Anzeigeanordnung verschiebbar an der Gehäuseanordnung montiert ist, wobei die erste Position einer eingezogenen Position der Anzeigeanordnung entspricht, in der der erste Abschnitt des Anzeigebildschirms im Inneren des Hohlraums aufgenommen ist und der zweite Abschnitt des Anzeigebildschirms außerhalb des Hohlraums sichtbar ist, und die zweite Position einer ausgezogenen Position der Anzeigebildschirmanordnung entspricht, in der der erste Abschnitt und der zweite Abschnitt des Anzeigebildschirms beide außerhalb des Hohlraums sichtbar sind.

## Revendications

1. Procédé pour piloter un écran d'affichage d'un dispositif électronique portable (100), le dispositif (100) comprenant :
un premier ensemble (200) ;
un ensemble d'affichage (202) comprenant un écran d'affichage (204), l'ensemble d'affichage (202) et le premier ensemble (200) étant mobiles l'un par rapport à l'autre entre une première position dans laquelle une première partie (220) de l'écran d'affichage (204) est dissimulée par le premier ensemble tandis qu'une seconde partie (222) de l'écran d'affichage (204) est visible, et une seconde position dans laquelle à la fois la première partie (220) et la seconde partie (222) sont visibles ; et
un capteur de position (258) pour fournir des informations de position indiquant si l'ensemble d'affichage (202) et le premier ensemble (200) sont dans la première position ou dans la seconde position ;
l'éclairage de la première partie de l'écran d'affichage étant désactivé et l'éclairage de la seconde partie de l'écran d'affichage étant activé dans la première position et l'éclairage à la fois des première et seconde parties étant activés dans la seconde position ;
le procédé étant **caractérisé par** :
compenser le vieillissement différentiel de l'écran d'affichage (204) en
permettant à un utilisateur d'ajuster manuellement des degrés d'éclairage de la première partie et de la seconde partie jusqu'à ce qu'une différence de luminosité entre la première partie et la seconde partie soit minimale ; et
stockant un facteur de correction ou ajustant les facteurs de vieillissement à utiliser dans des ajustements futurs aux degrés relatifs d'éclairage ;
suivre, au cours du temps, des durées d'éclairage relatives des première et seconde parties ;
le suivi au cours du temps des durées d'éclairage relatives comprenant déterminer, en fonction d'informations reçues en provenance du capteur de position, si la première partie de l'écran d'affichage est dissimulée ou est visible lorsque l'écran d'affichage est éclairé ; et
sur la base des durées d'éclairage relatives, ajuster un degré d'éclairage relatif de la première partie et/ou de la seconde partie lorsque l'écran d'affichage est dans la seconde position pour compenser un vieillissement différentiel entre les première et seconde parties.

2. Procédé selon la revendication 1, dans lequel le suivi au cours du temps de durées d'éclairage relatives comprend mettre à jour, dans une mémoire du dispositif électronique portable, des durées totales cumulatives qui suivent une durée totale d'éclairage de l'écran d'affichage lorsque la première partie de l'écran d'affichage est visible et une durée totale d'éclairage de l'écran d'affichage lorsque la première partie de l'écran d'affichage est dissimulée.

3. Procédé selon la revendication 2, dans lequel un niveau d'éclairage de l'écran d'affichage peut être réglé à différentes valeurs au cours du temps, et le suivi au cours du temps des durées d'éclairage relatives comprend ajuster les durées d'éclairage en fonction des niveaux d'éclairage réglés.

4. Procédé selon l'une quelconque des revendications 1 à 3, dans lequel l'ajustement du degré d'éclairage relatif comprend assombrir la première partie sur la base des durées d'éclairage relatives de la première partie et de la seconde partie pour compenser le vieillissement différentiel des première et seconde parties.

5. Procédé selon l'une quelconque des revendications 1 à 4, comprenant, avant d'ajuster un degré d'éclairage relatif, déterminer si un seuil de vieillissement d'écran d'affichage a été atteint et, si tel n'est pas le cas, s'abstenir d'ajuster un degré d'éclairage relatif de telle sorte que le degré d'éclairage relatif est uniquement ajusté après que le seuil de vieillissement d'écran d'affichage a été dépassé.

6. Procédé selon l'une quelconque des revendications 1 à 5, dans lequel le seuil de vieillissement d'écran d'affichage est basé sur une durée d'éclairage cumulative totale de l'écran d'affichage et/ou un vieillissement du dispositif électronique portable.

7. Procédé selon l'une quelconque des revendications 1 à 6, dans lequel l'écran d'affichage est un écran d'affichage coulissant, la première position correspondant à une position rétractée de l'écran d'affichage et la seconde position correspondant à une position d'extension de l'écran d'affichage.

8. Dispositif électronique portable (100) comprenant :
un premier ensemble (200) ;
un ensemble d'affichage (202) comprenant un écran d'affichage (204), l'ensemble d'affichage (202) et le premier ensemble (200) étant mobiles l'un par rapport à l'autre entre une première position dans laquelle une première partie (220) de l'écran d'affichage (204) est dissimulée par le premier ensemble tandis qu'une seconde partie (222) de l'écran d'affichage (204) est visible, et une seconde position dans laquelle à la fois la première partie (220) et la seconde partie (222) sont visibles ;
un processeur (102) configuré pour commander le fonctionnement de l'écran d'affichage ;
un capteur de position (258) pour fournir des informations de position au processeur (102) indiquant si l'ensemble d'affichage (202) et le premier ensemble (200) sont dans la première position ou dans la seconde position ;
le processeur (102) étant configuré pour désactiver l'éclairage de la première partie de l'écran d'affichage et activer l'éclairage de la seconde partie de l'écran d'affichage lorsque les informations de position indiquent la première position, et activer l'éclairage à la fois des première et seconde parties lorsque les informations de position indiquent la seconde position ;
le dispositif étant **caractérisé par** :
le processeur étant configuré pour compenser un vieillissement différentiel de l'écran d'affichage (204) en permettant à un utilisateur d'ajuster manuellement des degrés d'éclairage de la première partie et de la seconde partie jusqu'à ce qu'une différence de luminosité entre la première partie et la seconde partie soit minimale ; et
le processeur étant configuré pour stocker un facteur de correction ou ajuster les facteurs de vieillissement à utiliser dans des ajustements futurs aux degrés relatifs d'éclairage ;
le processeur étant configuré pour suivre, au cours du temps, des durées d'éclairage relatives de la première partie et de la seconde partie et ajuster, en fonction des durées d'éclairage relatives suivies, un degré d'éclairage relatif de la première partie et/ou de la seconde partie lorsque l'écran d'affichage est dans la seconde position pour compenser un vieillissement différentiel d'écran d'affichage entre les première et seconde parties ;
le processeur étant configuré pour suivre, au cours du temps, les durées d'éclairage relatives de la première partie ou de la seconde partie sur la base d'une position telle que détectée par le capteur de position lorsque l'écran d'affichage est éclairé.

9. Dispositif portable selon la revendication 8, dans lequel le processeur est configuré pour mettre à jour, dans une mémoire du dispositif électronique portable, des durées totales cumulatives qui suivent une durée totale d'éclairage de l'écran d'affichage (204) dans la seconde position et une durée totale d'éclairage de l'écran d'affichage dans la première position.

10. Dispositif électronique portable selon la revendication 8 ou 9, dans lequel un niveau d'éclairage de l'écran d'affichage peut être réglé à différentes valeurs au cours du temps, et le processeur est configuré pour ajuster les durées d'éclairage en fonction des niveaux d'éclairage réglés.

11. Dispositif électronique portable selon l'une quelconque des revendications 8 à 10, dans lequel le processeur (102) est configuré pour réduire le degré d'éclairage relatif de la première partie par un facteur de compensation afin de compenser le vieillissement différentiel d'écran d'affichage.

12. Dispositif électronique portable selon l'une quelconque des revendications 8 à 11, dans lequel l'écran d'affichage comprend des pixels qui sont faits de différents sous-pixels colorés, et l'ajustement du degré d'éclairage relatif comprend ajuster, sur la base d'une couleur, des degrés d'éclairages des différents sous-pixels dans l'écran d'affichage (204) pour compenser le vieillissement différentiel des différents sous-pixels.

13. Dispositif électronique portable selon l'une quelconque des revendications 8 à 12, dans lequel l'écran d'affichage comprend un dispositif à diode électroluminescente organique (DELO), et le premier ensemble est un ensemble boîtier ayant une cavité (218), et l'ensemble d'affichage est monté de manière coulissante sur l'ensemble boîtier, la première position correspondant à une position rétractée de l'ensemble d'affichage dans laquelle la première partie de l'écran d'affichage est reçue à l'intérieur de la cavité et la seconde partie de l'écran d'affichage est visible à l'extérieur de la cavité, et la seconde position correspond à une position étendue de l'ensemble écran d'affichage dans laquelle la première partie et la seconde partie de l'écran d'affichage sont toutes les deux visibles à l'extérieur de la cavité.
